# EUROPEAN PATENT APPLICATION

(11) **EP 3 385 127 A1**
(43) Date of publication of application: **10.10.2018**
(21) Application number: 18165708.1
(22) Date of filing: 04.04.2018
(51) Int. Cl.: B60R 21/015

(54) **OCCUPANT DETECTION DEVICE**

(30) Priority: 07.04.2017 JP 2017076717
(71) Applicant: YAZAKI CORPORATION, Minato-ku Tokyo 108-8333 (JP)
(72) Inventor: KAWAGUCHI, Yasunori, Makinohara-shi, Shizuoka 421-0407 (JP); HAEUCHI, Yoshihiro, Makinohara-shi, Shizuoka 421-0407 (JP); MOCHIZUKI, Yoshimichi, Makinohara-shi, Shizuoka 421-0407 (JP)
(74) Representative: Grünecker Patent- und Rechtsanwälte PartG mbB

(57) **Abstract**

An occupant detection device (1) has an acceleration sensor (10), a photodetector unit (20), and a determining unit (30). The acceleration sensor (10) is provided in a vehicle to detect an acceleration of the vehicle. The photodetector unit (20) irradiates an internal space of the vehicle with light and detects a detection target on the basis of reflection light reflected from the internal space of the vehicle. The determining unit (30) determines whether or not the detection target is a passenger on the basis of an acceleration detection result detected by the acceleration sensor (10) and a light detection result detected by the photodetector unit (20).

## Description

### BACKGROUND OF THE INVENTION

### 1. Field of the Invention

The present invention relates to an occupant detection device.

### 2. Description of the Related Art

Conventionally, for example, an occupant detection device for detecting a passenger on a vehicle is mounted on the vehicle in some cases. This occupant detection device irradiates the inside of the vehicle with light and detects a passenger on the basis of reflection light reflected from the inside of the vehicle (for example, see Japanese Patent Application Laid-open No. 2004-333281).

However, in some cases, the occupant detection device of the related art erroneously detects a luggage loaded on the vehicle as a passenger when the passenger is detected on the basis of the reflection light reflected from the inside of the vehicle. Therefore, there is a room for further improvement in this regard.

### SUMMARY OF THE INVENTION

In view of the aforementioned problems, an object of the invention is to provide an occupant detection device capable of detecting a passenger riding on a vehicle with high accuracy.

In order to solve the above mentioned problem and achieve the object, an occupant detection device according to one aspect of the present invention includes an acceleration sensor provided in a vehicle to detect an acceleration of the vehicle; a photodetector unit that irradiates an internal space of the vehicle with light and detects a detection target on the basis of reflection light reflected from the internal space of the vehicle; and a determining unit that determines whether or not the detection target is a passenger on the basis of an acceleration detection result detected by the acceleration sensor and a light detection result detected by the photodetector unit.

According to another aspect of the present invention, in the occupant detection device, it is preferable that the determining unit does not determine whether or not the detection target is the passenger during a non-determination period having a start timing at which an acceleration variation with respect to a predetermined reference value is equal to or larger than a threshold value.

According to still another aspect of the present invention, in the occupant detection device, it is preferable that the determining unit determines an end timing of the non-determination period on the basis of the variation of the acceleration at the start timing.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a schematic diagram illustrating an exemplary configuration of an occupant detection device according to an embodiment;
FIG. 2 is a block diagram illustrating an exemplary configuration of the occupant detection device according to the embodiment;
FIG. 3 is a plan view illustrating exemplary configurations of main parts of a photodetector unit according to the embodiment;
FIG. 4 is a plan view illustrating an exemplary configuration of the photodetector unit according to the embodiment;
FIG. 5 is a diagram illustrating irradiation regions of light emitting units according to the embodiment;
FIG. 6 is a diagram illustrating an exemplary layout of a light receiving element according to the embodiment;
FIG. 7 is a diagram illustrating an exemplary receiving pattern of reflection light of the light receiving element according to the embodiment;
FIG. 8 is a diagram illustrating exemplary outputs of an acceleration sensor and a photodetector unit according to the embodiment; and
FIG. 9 is a flowchart illustrating an exemplary operation of the occupant detection device according to the embodiment.

### DETAILED DESCRIPTION OF THE PREFERRED EMBODIMENTS

Aspects (embodiments) for embodying the invention will be described in details with reference to the accompanying drawings. Details described in the following embodiments are not intended to limit the invention. In addition, elements described below also include those perceivable by a person ordinarily skilled in the art and those substantially equivalent thereto. Furthermore, the configurations described below can also be combined with each other as appropriate. Moreover, various omissions, substitutions, or changes may be possible without departing from the spirit and scope of the invention.

### Embodiment

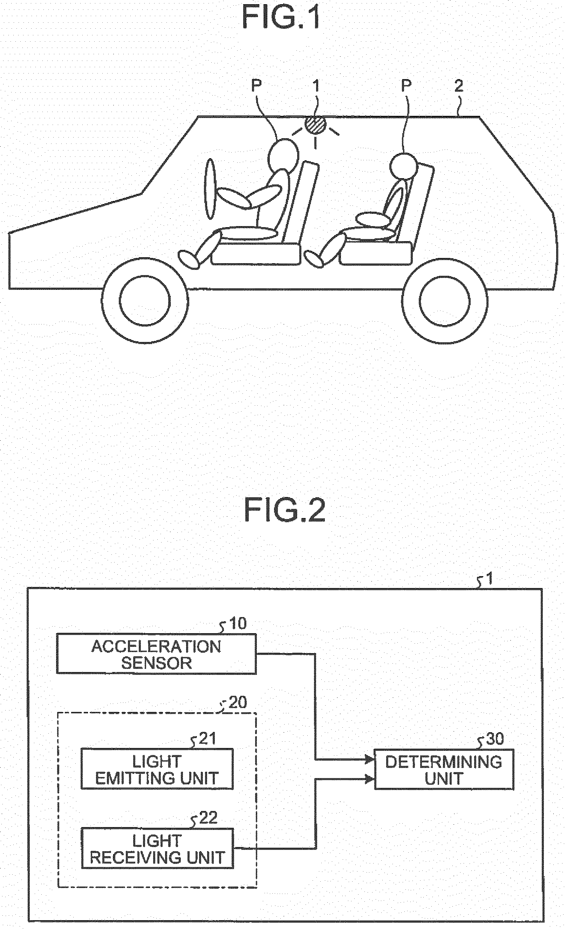

An occupant detection device 1 according to an embodiment will be described. The occupant detection device 1 is an device for detecting a passenger P inside a vehicle 2 as illustrated in FIG. 1. As illustrated in FIG. 2, the occupant detection device 1 includes an acceleration sensor 10, a photodetector unit 20, and a determining unit 30.

The acceleration sensor 10 is a device for detecting an acceleration of the vehicle 2 and is provided in the vehicle 2. The acceleration sensor 10 is provided in an indoor side of a roof of the vehicle 2. The acceleration sensor 10 is mounted on the same boards 21a and 22a as those of the photodetector unit 20 as described below. Since the acceleration sensor 10 is mounted on the same boards 21a and 22a in this manner, it is possible to suppress a size increase and reduce cost. In addition, since the acceleration sensor 10 is provided in the roof of the vehicle 2, it is possible to suppress influence from vibration caused by a passenger P, compared to a case where the acceleration sensor 10 is mounted on the same board as that of a pressure sensor provided under a seat of the vehicle 2 of the related art and detects the passenger P. The acceleration sensor 10 is, for example, a three-axis acceleration sensor that detects accelerations in the X-axis, Y-axis, and Z-axis directions perpendicular to each other. Here, the acceleration is a change rate of the speed per unit time. Various detection methods known in the art may be applied to the acceleration sensor 10. For example, an electrostatic capacitance detection method, a piezoresistance method, a heat detection method, or the like may be applied to the acceleration sensor 10. The acceleration sensor 10 is connected to the determining unit 30 to output detected accelerations of the X-axis, Y-axis, and Z-axis directions of the vehicle 2 to the determining unit 30.

The photodetector unit 20 is a device that irradiates the inside of the vehicle 2 with light and detects a motion of a detection target on the basis of reflection light reflected from the inside of the vehicle 2. The photodetector unit 20 is provided inside the vehicle 2, for example, in the indoor side of the roof of the vehicle 2. Alternatively, the photodetector unit 20 may be incorporated into a room lamp or the like. The photodetector unit 20 is provided in a position from which each seat of the vehicle 2 can be irradiated with light. The photodetector unit 20 has a light emitting unit 21 and a light receiving unit 22.

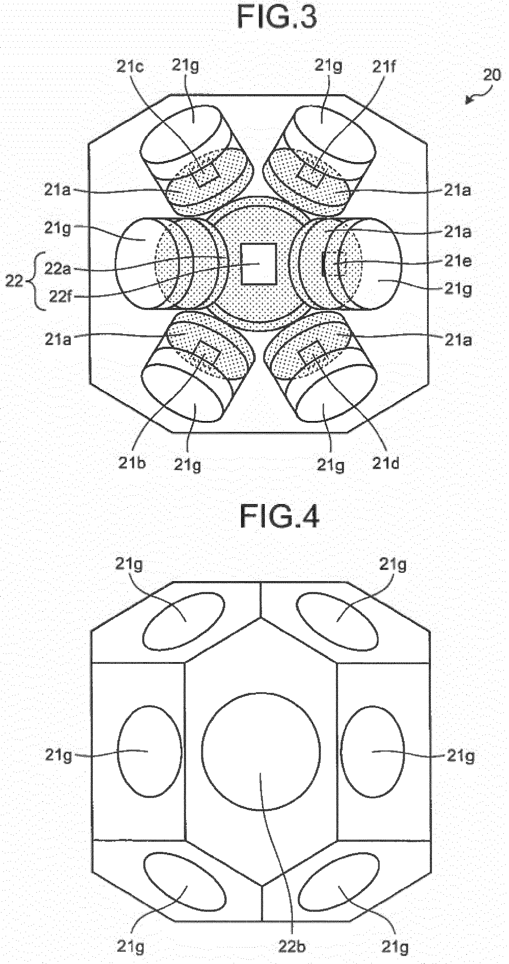

As illustrated in FIGS. 3 and 4, the light emitting unit 21 includes a board 21a, a plurality of light emitting elements 21b to 21f provided in the board 21a to irradiate the inside of the vehicle 2 with light, a plurality of light emitting lenses 21g provided to face each of the light emitting elements 21b to 21f to bend and scatter the light emitted from each of the light emitting elements 21b to 21f, and a power supply unit (not illustrated) provided in the board 21a to supply power to each of the light emitting elements 21b to 21f.

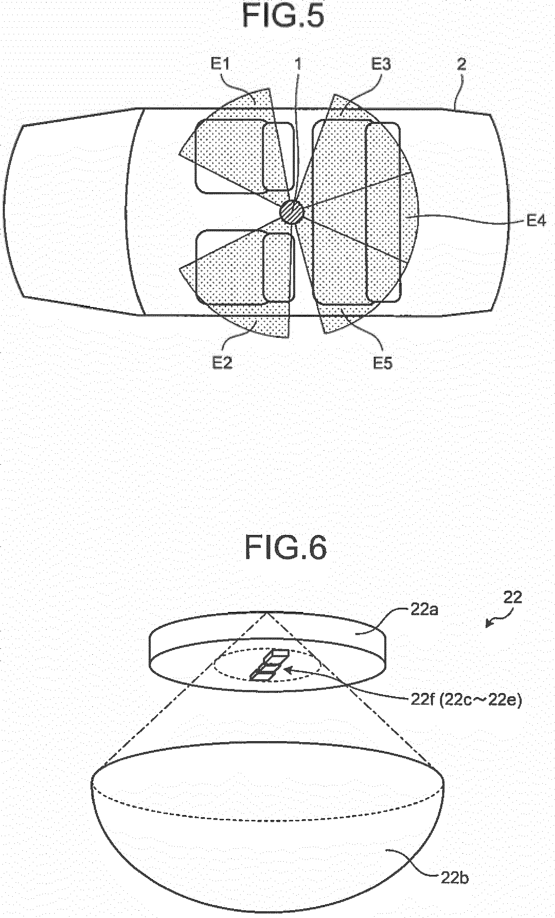

Each of the light emitting elements 21b to 21f is, for example, a near-infrared LED (near-infrared light emitting diode) that emits near-infrared rays. According to this embodiment, five light emitting elements including first to fifth light emitting elements 21b to 21f are employed as the light emitting elements 21b to 21f to emit light toward directions different from each other. As illustrated in FIG. 5, the first light emitting element 21b is provided to emit light, for example, to a first region E1 placed in the front right side with respect to a travel direction of the vehicle 2, and the second light emitting element 21c is provided to emit light toward a second region E2 placed in the front left side with respect to the travel direction of the vehicle 2. In addition, the third light emitting element 21d is provided to emit light toward a third region E3 placed in the rear right side with respect to the travel direction of the vehicle 2, and the fourth light emitting element 21e is provided to emit light toward a fourth region E4 placed in the rear center with respect to the travel direction of the vehicle 2. Furthermore, the fifth light emitting element 21f is provided to emit light toward a fifth region E5 placed in the rear left side with respect to the travel direction of the vehicle 2. Each of the light emitting elements 21b to 21f is controlled to emit light sequentially.

Each light emitting lens 21g is provided to face each of the light emitting elements 21b to 21f and emits light such that the light emitted from each of the light emitting elements 21b to 21f is emitted to each of the regions E1 to E5 of the vehicle 2. Each light emitting lens 21g is formed of, for example, a material capable of transmitting near-infrared rays. According to this embodiment, each light emitting lens 21g includes five light emitting lenses 21g, and each light emitting lens 21g is provided to face any one of the first to fifth light emitting elements 21b to 21f. The power supply unit includes a power supply, a switch circuit, a resistor, and the like. In the light emitting unit 21, power is sequentially supplied from the power supply unit to each of the light emitting elements 21b to 21f, and light is sequentially emitted from each of the light emitting elements 21b to 21f supplied with this power to each of the regions E1 to E5 through each light emitting lens 21g.

As illustrated in FIG. 6, the light receiving unit 22 includes a board 22a, a light receiving lens 22b that bends and condenses reflection light, and a light receiving element group 22f having a plurality of light receiving elements (first to third light receiving elements) 22c to 22e provided on the board 22a to receive reflection light through the light receiving lens 22b. In the light receiving unit 22, the three light receiving elements 22c to 22e receive reflection light for each of the five regions E1 to E5, and a single light receiving element receives reflection light from a plurality of regions. In the light receiving unit 22, the reflection light is received by each of the light receiving elements 22c to 22e whose number is smaller than the number of the regions E1 to E5 that receive the reflection light. Therefore, it is possible to suppress a size increase and reduce cost. In the light receiving unit 22, reflection light of the light sequentially emitted from each of the light emitting elements 21b to 21f to each of the regions E1 to E5 is sequentially received for each of the regions E1 to E5.

The light receiving lens 22b is provided to face each of the light receiving elements 22c to 22e to condense reflection light reflected from each of the regions E1 to E5 toward each of the light receiving elements 22c to 22e. The light receiving lens 22b is formed of, for example, a material capable of transmitting near-infrared rays. Note that components of the photodetector unit 20 other than the light receiving lens 22b and the light emitting lens 21g are formed of a material not capable of transmitting near-infrared rays in order to suppress reflection of light or ambient light. According to this embodiment, a single light receiving lens 22b is provided to condense reflection light reflected from each of the regions E1 to E5 toward each of the corresponding light receiving elements 22c to 22e.

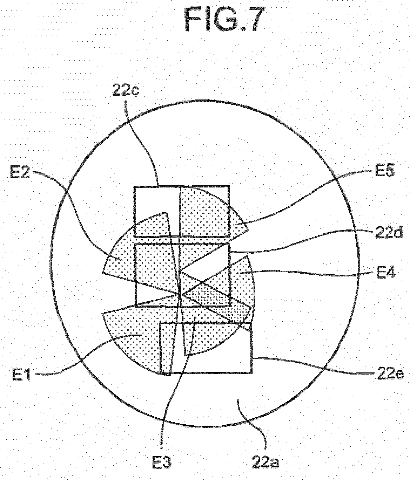

Each of the light receiving elements 22c to 22e of the light receiving element group 22f is, for example, a photodiode. Each of the light receiving elements 22c to 22e includes three photodiodes according to this embodiment. Each of the light receiving elements 22c to 22e receives predetermined one of reflection light beams reflected from a plurality of regions E1 to E5 through the light receiving lens 22b and optoelectrically converts the received reflection light. For example, the light receiving element group 22f receives reflection light using two light receiving elements for any one of the regions E1 to E5. Using a ratio of the amount of received light between two light receiving elements, it is possible to measure a distance to a detection target, for example, on the basis of a triangulation method or the like known in the art. For example, the light receiving element group 22f receives reflection light using the second and third light receiving elements 22d and 22e for the first region E1, receives reflection light using the first and second light receiving elements 22c and 22d for the second region E2, and receives reflection light using the second and third light receiving elements 22d and 22e for the third region E3 as illustrated in FIG. 7. In addition, the light receiving element group 22f receives reflection light using the second and third light receiving elements 22d and 22e for the fourth region E4 and receives reflection light using the first and second light receiving elements 22c and 22d for the fifth region E5. The light receiving element group 22f optoelectrically converts the reflection light received from each of the regions E1 to E5 and outputs it as a detection signal (electric signal) to the determining unit 30. Note that, since the photodetector unit 20 does not have any movable portion for moving the light emitting unit 21 or the light receiving unit 22, it is possible to suppress an optical path from deviating by a stress such as vibration of the vehicle 2 and provide more excellent durability.

The determining unit 30 is a circuit for determining whether or not the detection target is a passenger P. The determining unit 30 includes an electronic circuit, for example, having a microcomputer well known in the art as a main component including a central processing unit (CPU), a storage unit such as a read-only memory (ROM) and a random access memory (RAM), and an interface. The determining unit 30 determines whether or not the detection target is a passenger P on the basis of an acceleration detection result detected by the acceleration sensor 10 and a light detection result detected by the photodetector unit 20.

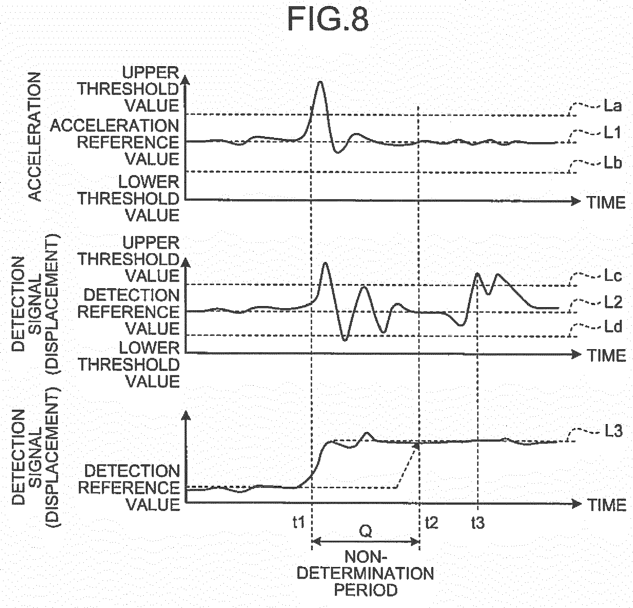

The determining unit 30 determines an acceleration variation on the basis of a predetermined reference value. That is, the determining unit 30 determines a difference between the reference value and the acceleration as the acceleration variation. Here, the reference values including, for example, an acceleration reference value L1, an upper threshold value La, and a lower threshold value Lb are stored in a storage unit as illustrated in FIG. 8. The acceleration reference value L1 is a value serving as a reference of the acceleration of the vehicle 2 and is set to, for example, zero. The upper threshold value La is a value higher than the acceleration reference value L1 by a certain level and is, for example, a threshold value of the acceleration generated in one side of a straight travel direction of the vehicle 2. The lower threshold value Lb is a value lower than the acceleration reference value L1 by a certain level and is, for example, a threshold value of the acceleration generated in the other side of the straight travel direction of the vehicle 2. When the acceleration output from the acceleration sensor 10 is equal to or higher than the upper threshold value La, or equal to or lower than the lower threshold value Lb, the determining unit 30 determines that there is a change in the acceleration of the vehicle 2. In addition, when the acceleration output from the acceleration sensor 10 is lower than the upper threshold value La and higher than the lower threshold value Lb, the determining unit 30 determines that there is no change in the acceleration of the vehicle 2.

The determining unit 30 determines whether or not a motion occurs in the detection target on the basis of the detection signal output from the photodetector unit 20. For example, the determining unit 30 obtains a ratio of the amount of light received by the two light receiving elements from the detection signal, measures a distance of the detection target using a triangulation method known in the art on the basis of a ratio of the amount of the received light, and detects a motion of the detection target on the basis of the measured distance. When a motion of the detection target is detected, the determining unit 30 detects it on the basis of a predetermined reference value. Here, the reference value includes, for example, the detection reference value L2, the upper threshold value Lc, and the lower threshold value Ld stored in the storage unit. The detection reference value L2 is a reference value for detecting a displacement of the ratio of the detection signal (the amount of the received light) output from each of the light receiving elements 22c to 22e of the photodetector unit 20. For example, the detection reference value L2 is determined in advance on the basis of the detection signal output from the photodetector unit 20 while nothing exists in the vehicle 2. The upper threshold value Lc is a value higher than the detection reference value L2 by a certain level, and the lower threshold value Ld is a value lower than the detection reference value L2 by a certain level. The determining unit 30 determines that the distance of the detection target changes in each of the regions E1 to E5 and determines that a motion occurs in the detection target when the displacement of the ratio of the detection signal (the amount of the received light) output from the photodetector unit 20 is equal to or higher than the upper threshold value Lc, or equal to or lower than the lower threshold value Ld. In addition, the determining unit 30 determines that the distance of the detection target does not change in each of the regions E1 to E5 and determines that no motion occurs in the detection target when the displacement of the ratio of the detection signal (the amount of the received light) output from the photodetector unit 20 is lower than the upper threshold value Lc and higher than the lower threshold value Ld.

The determining unit 30 determines whether or not the detection target is a passenger P on the basis of the acceleration detection result detected by the acceleration sensor 10 and the light detection result detected by the photodetector unit 20. The determining unit 30 does not determine whether or not the detection target is a passenger P during a non-determination period Q from a start timing t1 at which the acceleration variation is equal to or larger than the upper threshold value La (or equal to or smaller than the lower threshold value Lb) to an end timing t2 at which the acceleration variation is constant (converged to the acceleration reference value L1). By providing this non-determination period Q, the determining unit 30 can suppress erroneous detection between a luggage and a passenger P when the luggage inside the vehicle 2 moves in response to movement of the vehicle 2.

The determining unit 30 determines the end timing t2, for example, on the basis of a variation of the acceleration with respect to the acceleration reference value L1 at the start timing t1. The determining unit 30 determines the end timing t2 such that the non-determination period Q becomes relatively longer when the variation of the acceleration with respect to the acceleration reference value L1 at the start timing t1 is relatively large. In addition, the determining unit 30 determines the end timing t2 such that the non-determination period Q becomes relatively shorter when the variation of the acceleration with respect to the acceleration reference value L1 at the start timing t1 is relatively small. By variably setting the duration of the non-determination period Q in this manner, the determining unit 30 can optimally determine the end timing t2 until the acceleration variation becomes constant.

Note that, when a detection signal different from the existing value is output from the photodetector unit 20 as the luggage moves in each of the regions E1 to E5, the determining unit 30 changes the detection reference value L2 to be equal to the detection reference value L3 and changes the upper threshold value Lc and the lower threshold value Ld depending on the change of the detection reference value L3. The determining unit 30 can determine a motion of the detection target on the basis of this change while a luggage exists in each of the regions E1 to E5.

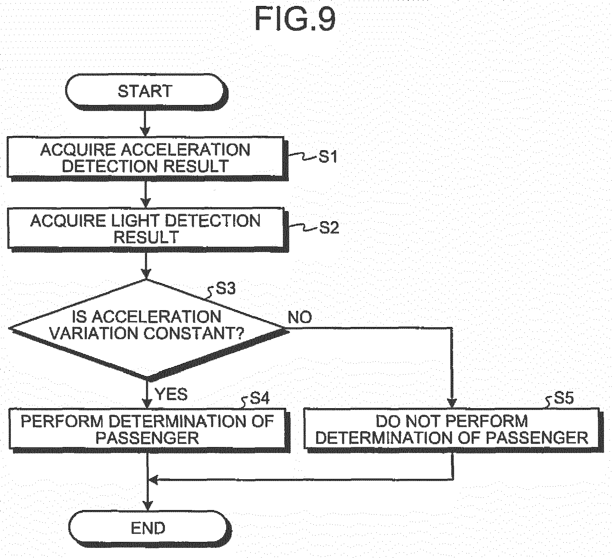

Next, an exemplary operation of the occupant detection device 1 will be described with reference to the flowchart of FIG. 9. The determining unit 30 of the occupant detection device 1 acquires an acceleration detection result from the acceleration sensor 10 (Step S1). Then, the determining unit 30 acquires the displacement of the ratio of the detection signal (the amount of the received light) as a light detection result from the photodetector unit 20 (Step S2). Then, the determining unit 30 determines whether or not the acceleration variation is constant (Step S3). When the acceleration variation is constant (Step S3: Yes), the determining unit 30 determines a passenger P (Step S4). For example, when the displacement of the ratio of the detection signal (the amount of the received light) output from the photodetector unit 20 is equal to or higher than the upper threshold value Lc, or equal to or lower than the lower threshold value Ld (for example, at the timing t3), the determining unit 30 determines that a passenger P rides in each of the corresponding regions E1 to E5. In addition, when the displacement of the ratio of the detection signal (the amount of the received light) output from the photodetector unit 20 is lower than the upper threshold value Lc and higher than the lower threshold value Ld, the determining unit 30 determines that a passenger P does not ride in each of the corresponding regions E1 to E5. When the acceleration variation is not constant (Step S3: No), the determining unit 30 does not determine a passenger P (Step S5). For example, the determining unit 30 does not perform determination based on the detection signal output from the photodetector unit 20 until the end of the non-determination period Q if it is determined that a change occurs in the acceleration of the vehicle 2.

As described above, the occupant detection device 1 according to an embodiment includes the acceleration sensor 10, the photodetector unit 20, and the determining unit 30. The acceleration sensor 10 is provided in the vehicle 2 to detect an acceleration of the vehicle 2. The photodetector unit 20 irradiates the inside of the vehicle 2 with light and detects the detection target on the basis of the reflection light reflected from the inside of the vehicle 2. The determining unit 30 determines whether or not the detection target is a passenger P on the basis of the acceleration detection result detected by the acceleration sensor 10 and the light detection result detected by the photodetector unit 20.

In this configuration, the occupant detection device 1 may perform determination based on the light detection result when the acceleration variation is constant. When the acceleration variation is not constant, the occupant detection device 1 may not perform determination based on the light detection result. In this control, the occupant detection device 1 can suppress erroneous determination between a luggage and a passenger P when the luggage inside the vehicle 2 moves in response to movement of the vehicle 2 when the acceleration variation is not constant. In this control, the occupant detection device 1 can determine a passenger P riding on the vehicle 2 with high accuracy.

In the occupant detection device 1, the determining unit 30 does not determine whether or not the detection target is a passenger P during the non-determination period Q having the start timing t1 at which the acceleration variation with respect to the predetermined acceleration reference value L1 is equal to or higher than the upper threshold value La, or equal to or lower than the lower threshold value Lb. In this non-determination, the occupant detection device 1 can suppress erroneous detection between a luggage and a passenger P when the luggage inside the vehicle 2 moves in response to movement of the vehicle 2. In addition, since the occupant detection device 1 does not perform the determination process having a high possibility of erroneous detection, it is possible to suppress a computation load.

In the occupant detection device 1, the determining unit 30 determines the end timing t2 of the non-determination period Q on the basis of the acceleration variation at the start timing t1. On the basis of this determination, the occupant detection device 1 can change a duration of the non-determination period Q depending on the acceleration variation of the start timing t1 as appropriate. In response to this change, the occupant detection device 1 can immediately perform the process of detecting a passenger P from the end timing t2 at which the acceleration variation becomes constant. Therefore, it is possible to appropriately detect a passenger P.

### Modification

Next, a modification of the embodiment will be described. The determining unit 30 may determine the end timing t2 in advance. In this case, the determining unit 30 sets the non-determination period Q to a fixed value. In this case, the non-determination period Q is preferably set to a maximum period until the acceleration variation generated depending on a type of the vehicle 2 becomes constant. By setting the non-determination period Q to this maximum period, it is possible to detect a motion of the detection target from the end timing t2 at which the acceleration variation securely becomes constant.

The acceleration reference value L1 is a value serving as a reference of the acceleration of the vehicle 2 and is set to, for example, zero. However, the invention is not limited thereto. An acceleration variation of the vehicle 2 may be measured during the stop of the vehicle 2, and the acceleration variation measured during this period may be set as the acceleration reference value L1 if the measured acceleration variation of the vehicle 2 is constant. Since the acceleration reference value L1 is obtained in this manner, the determining unit 30 can offset the acceleration reference value L1, for example, when vehicle 2 stops on a slope, and the acceleration is detected using the acceleration sensor 10. Therefore, it is possible to accurately measure the acceleration of the vehicle 2.

The acceleration variation is obtained on the basis of a difference between the acceleration and the acceleration reference value L1. However, the invention is not limited thereto. For example, the acceleration variation may be a rate of change of the acceleration per unit time. That is, the acceleration variation may be set using a derivative of the acceleration or a surge.

The acceleration sensor 10 is a three-axis acceleration sensor by way of example. However, the invention is not limited thereto. Alternatively, the acceleration sensor 10 may be a single-axis or two-axis acceleration sensor.

The determining unit 30 measures the distance of the detection target using the ratio of the amount of the received light between the two light receiving elements on the basis of a triangulation method and determines a motion of the detection target on the basis of the measured distance by way of example. However, the invention is not limited thereto. For example, the determining unit 30 may determine presence of the detection target on the basis of the amount of the received light of a single light receiving element and determine a motion of the detection target on the basis of the determined presence of the detection target.

The internal area of the vehicle 2 is divided into five regions E1 to E5. However, the method of dividing the area may change as appropriate. In addition, the light receiving unit 22 receives reflection light from the inside of the vehicle 2 using the three light receiving elements 22c to 22e. Alternatively, the reflection light from the inside of the vehicle 2 may be received using two light receiving elements.

The occupant detection device according to the embodiment determines whether or not the detection target is a passenger on the basis of an acceleration detection result detected by the acceleration sensor and a light detection result detected by the photodetector unit. Therefore, it is possible to detect a passenger riding on the vehicle with high accuracy.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. An occupant detection device comprising:
an acceleration sensor (10) provided in a vehicle (2) to detect an acceleration of the vehicle (2);
a photodetector unit (20) that irradiates an internal space of the vehicle (2) with light and detects a detection target on the basis of reflection light reflected from the internal space of the vehicle (2); and
a determining unit (30) that determines whether or not the detection target is a passenger (P) on the basis of an acceleration detection result detected by the acceleration sensor (10) and a light detection result detected by the photodetector unit (20).

2. The occupant detection device according to claim 1, wherein
the determining unit (30) does not determine whether or not the detection target is the passenger (P) during a non-determination period having a start timing at which an acceleration variation with respect to a predetermined reference value is equal to or larger than a threshold value.

3. The occupant detection device according to claim 2, wherein
the determining unit (30) determines an end timing of the non-determination period on the basis of the variation of the acceleration at the start timing.
detected by the photodetector unit (20).
